# EUROPEAN PATENT APPLICATION

(11) **EP 4 776 386 A1**
(43) Date of publication of application: **15.07.2026**
(21) Application number: 25864504.3
(22) Date of filing: 11.07.2025
(51) Int. Cl.: H01M 10/6556, H01M 10/613, H01M 10/6551, B21C 23/06, B23K 20/12, H01M 10/625

(54) **BATTERY PACK AND VEHICLE INCLUDING SAME**

(30) Priority: 20.11.2024 KR 20240166139
(71) Applicant: LG ENERGY SOLUTION, LTD., Seoul 07335 (KR)
(72) Inventor: JUNG, Kitaek, Daejeon 34122 (KR); PARK, Won Kyoung, Daejeon 34122 (KR); LEE, Joonyeong, Daejeon 34122 (KR)
(74) Representative: Plasseraud IP
(86) International application number: PCT/KR2025/010165
(87) International publication number: WO 2026/111086

(57) **Abstract**

A battery pack according to an embodiment of the disclosure includes a battery cell assembly and a pack case accommodating the battery cell assembly. The pack case is made by coupling a plurality of parts with a cooling flow path formed inside and includes a bottom cover facing a lower surface of the battery cell assembly. (Representative figure: FIG. 4)

## Description

### [TECHNICAL FIELD]

The disclosure relates to a battery pack and a vehicle including the same.

### [BACKGROUND ART]

Secondary batteries, which have high applicability according to product groups and electrical characteristics, such as high energy density, have been universally applied not only to portable devices but also to electric vehicles (EVs) or hybrid electric vehicles (HEVs) driven by electric power sources.

These secondary batteries have the primary advantage of being able to drastically reduce the use of fossil fuels, as well as the advantage of not generating any byproducts from the use of energy, and are thus have come to prominence as a new energy source for improving environmental friendliness and energy efficiency.

The types of secondary batteries that are currently widely used include lithium ion batteries, lithium polymer batteries, nickel cadmium batteries, nickel hydrogen batteries, nickel zinc batteries, etc. An operating voltage of these unit secondary battery cells, i.e., unit battery cells, is approximately 2.5 V to 4.6 V. Therefore, when a higher output voltage is required, a battery pack is configured by connecting a plurality of battery cells in series. In addition, a battery pack is configured by connecting a plurality of battery cells in parallel according to the charge/discharge capacity required for the battery pack. Therefore, the number of battery cells included in the battery pack may be set to vary according to the required output voltage or charge/discharge capacity.

In the case of configuring a battery pack by connecting a plurality of battery cells in series or in parallel, it is common to first configure a battery module including at least one battery cell, preferably, a plurality of battery cells, and then configure a battery pack using at least one of these battery modules and adding other components. Here, the battery module refers to a component in which a plurality of battery cells are connected in series or in parallel, and the battery pack refers to a component in which a plurality of battery modules are connected in series or in parallel to increase capacity and output, etc.

Meanwhile, a method of manufacturing a battery pack using a cell-to-pack (CTP) method has been developed recently. The CTP is a technology that arranges more battery cells inside a package by significantly reducing the weight of a module in the process of making a battery cell into a package. For example, if an electric vehicle has about 100 battery cells, generally, about 10 battery cells are bundled into one battery module, and battery modules made in this manner are assembled into one battery pack and then installed in the electric vehicle. Here, the CTP method is characterized by assembling the battery cells directly inside the battery pack. By eliminating the battery module in this manner, more space is secured, which increases the energy density and increases the capacity, and the number of parts is reduced, which also increases a cost reduction effect.

However, the CTP method has a problem in that it is difficult to maintain product quality control and productivity due to a large amount of heat generation, while having a high energy density.

### [DETAILED DESCRIPTION OF INVENTION]

### [TECHNICAL PROBLEMS]

The disclosure provides a battery pack capable of effectively cooling heat generated in a battery cell assembly.

In addition, the disclosure provides a vehicle including the aforementioned battery pack.

However, the technical problem to be solved by the disclosure is not limited to the above-described problem, and other problems not mentioned may be clearly understood by those skilled in the art from the description of the invention given below.

### [TECHNICAL SOLUTION]

According to an embodiment of the disclosure, a battery pack includes a battery cell assembly and a pack case accommodating the battery cell assembly. The pack case is made by coupling a plurality of parts with a cooling flow path formed inside and includes a bottom cover facing a lower surface of the battery cell assembly.

The plurality of parts may include a first part formed as an isosceles triangle and a second part and a third part formed as a right-angled trapezoid.

Here, the first part may be a right isosceles triangle.

Also, inclined sides of the second part and the third part may respectively be connected to two sides forming a right angle in the first part.

In addition, the plurality of parts constituting the bottom cover may further include an auxiliary part coupled to the other end portion of the second part and the other end portion of the third part, which are opposite to one end portion coupled to the first part.

In addition, an inlet port for introducing a refrigerant and a discharge port for discharging the refrigerant, which may be connected to the cooling flow path formed inside, may be formed in one or more of the second part and the third part.

The refrigerant introduced through the inlet port may move along the cooling flow path in an order of the second part, the first part, and the third part or move in an order of the third part, the first part, and the second part.

For example, the cooling flow path may be formed in a " 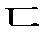 " pattern as the plurality of parts are coupled.

A connection groove for connection between adjacent cooling flow paths may be formed at end portions of the second part and the third part facing the auxiliary part.

The connection groove may be formed by cutting.

In addition, the battery pack may further include a refrigerant circulation device accommodated inside the pack case and connected to the inlet port and the discharge port to circulate the refrigerant.

In addition, a thermal resin may be interposed between the battery cell assembly and the bottom cover of the pack case.

In addition, the plurality of parts may each be formed of aluminum extrusion molding.

In addition, the plurality of parts may be coupled to each other through friction stir welding (FSW).

In addition, the pack case may further include a top cover facing an upper surface of the battery cell assembly and a side cover formed in a direction connecting the top cover and the bottom cover.

In addition, according to an embodiment of the disclosure, a vehicle including the battery pack described above is provided.

### [EFFECT OF INVENTION]

According to the disclosure, heat generated in a battery cell assembly may be effectively cooled.

However, the effects that may be obtained through the disclosure are not limited to the effects described above, and other technical effects that are not mentioned may be clearly understood by those skilled in the art from the description of the invention given below.

### [BRIEF DESCRIPTION OF THE DRAWING]

The following drawings attached to this specification illustrate preferred embodiments of the disclosure and serve to further understand the technical idea of the disclosure together with the detailed description of the invention given below, so the disclosure should not be interpreted as being limited to matters described in such drawings.
FIG. 1 is a perspective view illustrating a battery pack according to an embodiment of the disclosure.
FIG. 2 is an exploded perspective view of the battery pack of FIG. 1.
FIG. 3 is a plan view illustrating a bottom cover of a pack case used in the battery pack of FIG. 1.
FIG. 4 is a diagram illustrating a cooling flow path formed inside a bottom cover of FIG. 3.
FIG. 5 is a perspective view illustrating a connection groove formed inside the bottom cover of FIG. 3.
FIG. 6 is a diagram illustrating a vehicle including at least one battery pack of FIG. 1.

### [BEST MODE FOR CARRYING OUT THE INVENTION]

The advantages and features of the disclosure and the methods for achieving them will become apparent by referring to the embodiments described in detail below together with the accompanying drawings. However, the disclosure is not limited to the embodiments disclosed below but may be implemented in various different forms, and these embodiments are provided only to make the disclosure of the disclosure complete and to fully inform those skilled in the art of the scope of the invention, and the disclosure is defined only by the scope of the claims. Accordingly, in some embodiments, well-known process steps, well-known device structures, and well-known techniques are not specifically described in order to avoid ambiguity in the interpretation of the disclosure. Like reference numerals refer to like elements throughout the specification.

In the drawings, the thickness of layers, films, panels, regions, etc., are exaggerated for clarity. The various Figures are thus not to scale. Like reference numerals designate like elements throughout the specification. It will be understood that when an element, such as a layer, film, region, or substrate is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate is referred to as being "below" another element, it may be directly below the other element or intervening elements may also be present. In contrast, when an element is referred to as being "directly under" another element, there are no intervening elements present.

Throughout the specification, unless otherwise specifically stated, each element may be singular or plural.

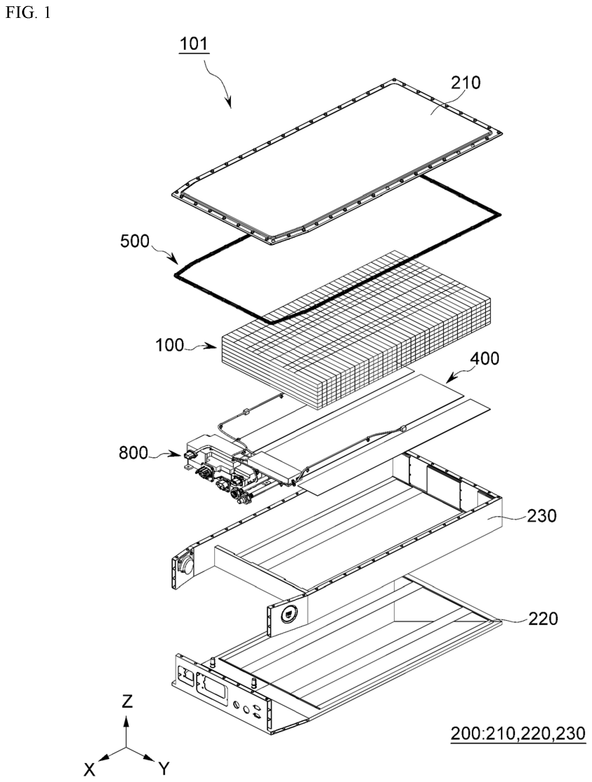

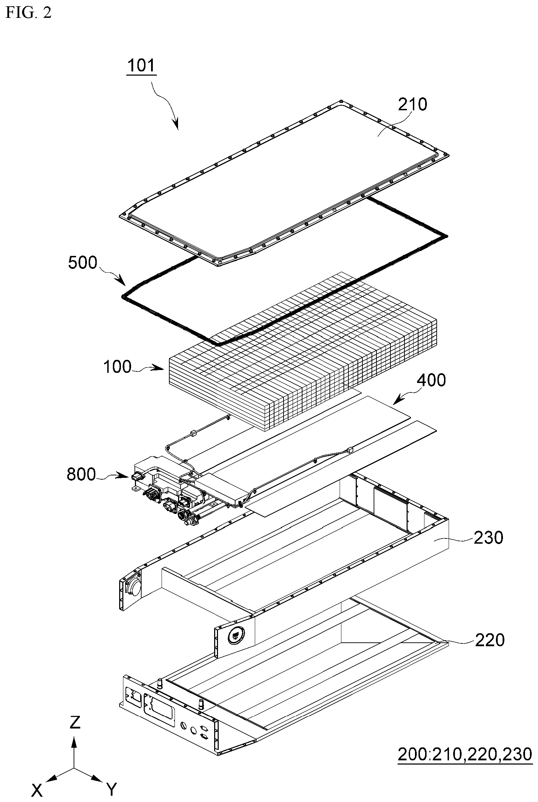

FIGS. 1 and 2 are diagrams illustrating a battery pack 101 according to an embodiment of the disclosure. FIG. 1 is a perspective view of a battery pack 101 according to an embodiment of the disclosure, and FIG. 2 is an exploded perspective view of the battery pack 101.

Referring to FIGS. 1 and 2, the battery pack 101 according to an embodiment of the disclosure includes a battery cell assembly 100 and a pack case 200.

In addition, the battery pack 101 according to an embodiment of the disclosure may further include a refrigerant circulation device 800 and a thermal resin.

The battery cell assembly 100 may be manufactured by stacking a plurality of battery cells in one direction.

A lateral direction in which the battery cells are stacked may be the X-axis direction. In addition, a direction from the front to the rear of the battery cell, or the opposite direction, may be defined as a length direction of the battery cell. This may be the Y-axis direction in FIG. 2. In addition, a direction from an upper surface of the battery cell to a lower surface, or the opposite direction, may be defined as a width direction of the battery cell. This may be the Z-axis direction in FIG. 2.

In addition, the battery cell may be, for example, a prismatic battery cell or a pouch-type battery cell. The prismatic battery cell and the pouch-type battery cell may be stacked such that the number of times they are stacked per unit area is maximized. However, the battery cell 110 is not necessarily limited to a prismatic battery cell or a pouch-type battery cell and may be various other types of battery cells.

The pack case 200 accommodates the battery cell assembly 100. That is, the battery cell assembly 100 is directly accommodated inside the pack case 200 in a cell-to-pack (CTP) manner. However, the disclosure is not limited to the battery pack 101 assembled in the CTP manner.

In addition, the pack case 200 includes a bottom cover 220. In addition, the pack case 200 may further include a top cover 210 and a side cover 230. For example, the pack case 200 may be formed of aluminum. Accordingly, the pack case 200 may be light and have high thermal conductivity.

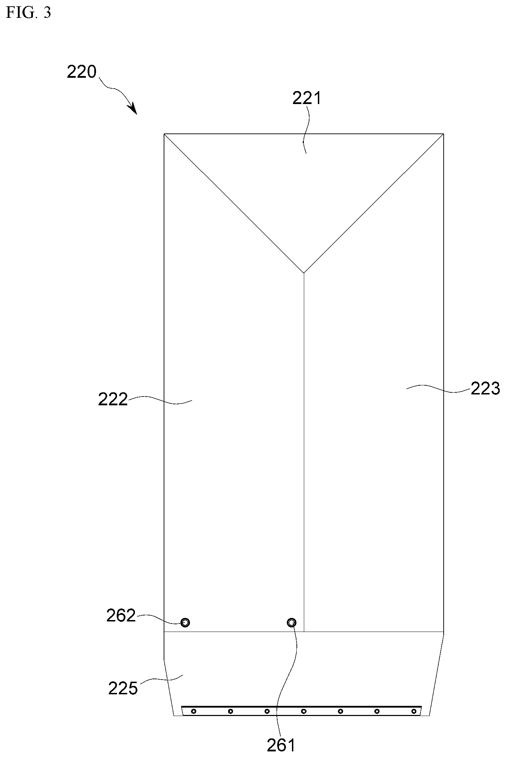

FIG. 3 is a plan view illustrating the bottom cover 220 of the pack case 200.

Referring to FIG. 3, the bottom cover 220 is formed by coupling a plurality of parts 221, 222, and 223 in which a cooling flow path 260 is formed and faces a lower surface of the battery cell assembly 100. In addition, the plurality of parts 221, 222, and 223 may include a first part 221 formed as an isosceles triangle and a second part 222 and a third part 223 formed as a right-angled trapezoid.

For example, the first part 221 may be a right isosceles triangle. Here, the inclined sides of the second part 222 and the third part 223 may be connected to two sides forming a right angle in the first part 221, respectively. That is, the angle between the side in which the first part 221 contacts the second part 222 and the side in which the first part 221 contacts the third part 223 may be 90 degrees. In addition, the side in which the first part 221 and the second part 222 contact and the side in which the first part 221 and the third part 223 contact are inclined at an angle of 45 degrees with respect to the side of the first part 221 corresponding to the end of the bottom cover 220.

In addition, the plurality of parts constituting the bottom cover 220 may further include an auxiliary part 225. The auxiliary part 225 may be coupled to the other end portion of the second part 222 and the other end portion of the third part 223 opposite to one end portion coupled to the first part 221. At this time, a cooling flow path 260 is formed inside the first part 221, the second part 222, and the third part 223, but the cooling flow path 260 may not be formed inside the auxiliary part 225.

In addition, an inlet port 261 for introducing a refrigerant and a discharge port 262 for discharging the refrigerant may be formed in one or more of the second part 222 and the third part 223 and may be connected to the cooling flow path 260.

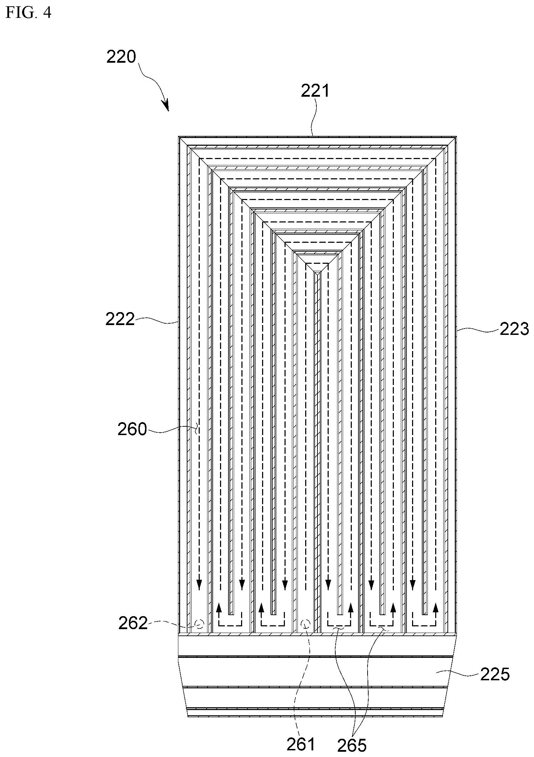

FIG. 4 shows a cooling flow path formed inside the bottom cover.

Referring to FIG. 4, the cooling flow path 260 may be formed in a " 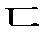 " pattern by coupling the plurality of parts 221, 222, and 223. In FIG. 4, the dotted arrows indicate a path along which the refrigerant flowing into the inlet port 261 moves toward the discharge port 262 along the cooling flow path 260.

Specifically, a connection groove 265 for connection between adjacent cooling flow paths 260 may be formed at the end portions of the second part 222 and the third part 223 facing the auxiliary part 225. For example, the connection groove 265 may be formed by cutting a portion of a partition wall forming the cooling flow path 260 at the end portions of the second part 222 and the third part 223 facing the auxiliary part 225.

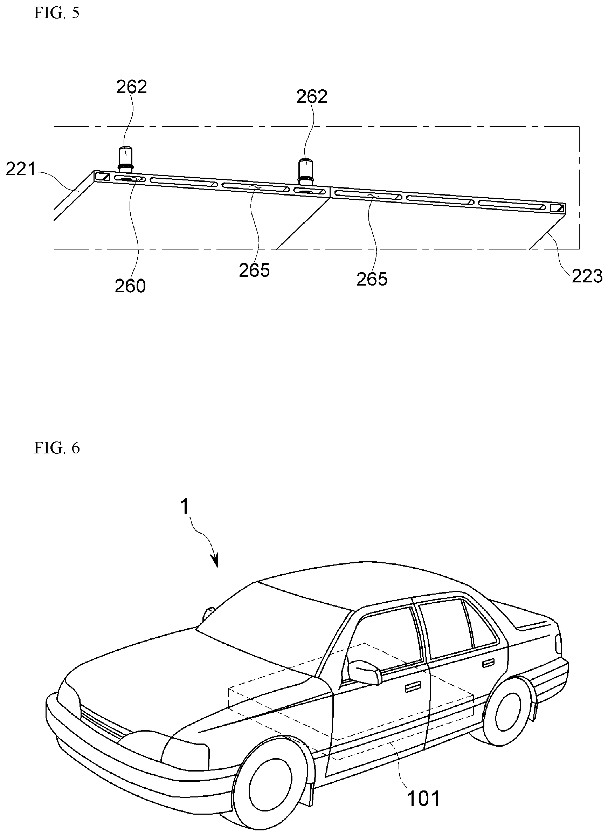

As shown in FIG. 5, since the connection groove 265 is formed at the end portions of the second part 222 and the third part 223, the connection groove 265 may be easily cut and processed.

Also, referring back to FIG. 4, the auxiliary part 225 is connected to the end portions of the second part 221 and the third part 223 to form a kind of partition wall that forms the cooling flow path 260.

According to this structure, the cooling flow path 260 is formed in a straight line inside each of the parts 221, 222, and 223, and the cooling flow path 260 in a " 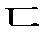 " pattern is formed by connecting them. Also, the connection groove 265 is formed at the end portions of the second part 222 and the third part 223 and the auxiliary part 225 is coupled to the end portions of the second part 222 and the third part 223, thereby completing the cooling flow path 260.

Therefore, since the cooling flow path 260 in the " 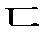 " pattern may be easily formed finally by coupling the plurality of parts 221, 222, and 223 forming the cooling flow path 260 only by straight processing, the productivity of the bottom cover 220 having the cooling flow path 260 with improved cooling efficiency may be significantly increased.

Accordingly, according to an embodiment of the disclosure, a refrigerant introduced through the inlet port 261 moves along the cooling flow path 260 in the order of the second part 222, the first part 221, and the third part 223, moves to the adjacent cooling flow path 260 through the connection groove 265, and then moves in the order of the third part 223, the first part 221, and the second part 222, and repeats this process to move toward the discharge port 262.

Meanwhile, the bottom cover 220 may each be formed of aluminum extrusion molding.

In addition, the plurality of parts constituting the bottom cover 220 may be coupled to each other through friction stir welding (FSW).

Referring back to FIG. 2, the top cover 210 of the pack case 200 may face an upper surface of the battery cell assembly 100, and the side cover 230 may be formed in a direction that connects the top cover 210 and the bottom cover 220. For example, the side cover 230 and the bottom cover 220 may be welded, and the side cover 230 and the top cover 210 may be detachably connected through a fastening unit, such as a coupling bolt.

In addition, the pack case 200 may further include a gasket 500 interposed between the top cover 210 and the side cover 230. The gasket 500 is interposed between the top cover 210 and the side cover 230 that are detachably coupled, thereby improving airtightness when the top cover 210 and the side cover 230 are coupled.

The refrigerant circulation device 800 is accommodated inside the pack case 200 on the auxiliary part 225 of the bottom cover 220 and is connected to the inlet port 261 and the discharge port 262 to circulate the refrigerant. For example, the refrigerant circulation device 800 may include a pump and a temperature sensor, etc.

A thermal resin 400 may be interposed between the battery cell assembly 100 and the bottom cover 220 of the pack case 200. The thermal resin 400 improves heat transfer efficiency between the battery cell assembly 100 and the bottom cover 220 of the pack case 200.

In addition, the battery pack 101 may further include a battery management system (BMS) and a battery disconnect unit (BDU), etc.

The battery management system (BMS) may control charging and discharging of the battery pack 101. Specifically, the battery management system may be configured to control the overall charging and discharging operation or data transmission and reception operation of the battery pack 101. The battery management system may be arranged to control a charging and discharging state, power state, and performance state of the battery cell through the pack voltage and pack current. The battery management system may estimate the state of the battery cell in the battery pack 101 and manage the battery pack 101 using the estimated state information. For example, the battery management system may estimate and manage state information of the battery pack 101, such as a state of charge (SOC), state of health (SOH), maximum input/output power allowance, and output voltage. In addition, the charging or discharging of the battery pack 101 may be controlled using such state information, and further, the replacement time of the battery pack 101 may be estimated.

The battery disconnect unit (BDU) may be configured to control the electrical connection of battery cells in order to manage power capacity and function of the battery pack 101. To this end, the battery disconnect unit may include a power relay, a current sensor, a fuse, etc. The battery disconnect unit is a component provided to each pack unit, and various disconnect units known at the time of filing of the disclosure may be applied.

According to this configuration, the battery pack 101 may effectively cool the heat generated by the battery cell assembly 100 and stably maintain an appropriate temperature.

FIG. 6 is a diagram illustrating a vehicle 1 including the battery pack 101 of FIG. 1.

Referring to FIG. 6, the vehicle 1 according to the disclosure may include at least one battery pack 101 according to the disclosure. The vehicle 1 according to an embodiment of the disclosure may be, for example, an electric vehicle, a hybrid vehicle, or a plug-in hybrid vehicle and includes the battery pack 101 according to an embodiment of the disclosure. The vehicle 1 includes a four-wheeled vehicle and a two-wheeled vehicle. The vehicle 1 operates upon receiving power from the battery pack 101 according to an embodiment of the disclosure. In addition, the vehicle 1 according to the disclosure may further include various other components included in the vehicle in addition to the battery pack 101. For example, the vehicle 1 according to the disclosure may further include a vehicle body, a motor, an electronic control unit (ECU), etc. in addition to the battery pack 101 according to the disclosure.

Meanwhile, although terms indicating directions, such as up and down, are used in this specification, it is obvious to those skilled in the art that these terms are only for the convenience of description and may vary depending on a location of a target object or a location of an observer.

Although the disclosure has been described above with limited embodiments and drawings, the disclosure is not limited thereto, and it is obvious that various modifications and variations may be made within the scope of the technical idea of the disclosure and the equivalent scope of the claims to be described below by those skilled in the art.

### [DESCRIPTION OF REFERENCE NUMERALS]

1: vehicle
100: battery cell assembly
101: battery pack
200: pack case
210: top cover
220: bottom cover
221: first part
222: second part
223: third part
225: auxiliary part
230: side cover
260: cooling flow path
261: inlet port
262: discharge port
265: connection groove
400: thermal resin
500: gasket
800: refrigerant circulation device

### [INDUSTRIAL APPLICABILITY]

The disclosure may be used to provide a battery pack capable of effectively cooling heat generated in a battery cell assembly.

## Claims

1. A battery pack comprising:
a battery cell assembly; and
a pack case accommodating the battery cell assembly,
wherein the pack case is made by coupling a plurality of parts with a cooling flow path formed inside and includes a bottom cover facing a lower surface of the battery cell assembly.

2. The battery pack of claim 1, wherein
the plurality of parts include:
a first part formed as an isosceles triangle; and
a second part and a third part formed as a right-angled trapezoid.

3. The battery pack of claim 2, wherein the first part is a right isosceles triangle.

4. The battery pack of claim 2, wherein inclined sides of the second part and the third part are respectively connected to two sides forming a right angle in the first part.

5. The battery pack according to claim 4, **characterised in that** the plurality of parts constituting the bottom cover further comprises an auxiliary part coupled to the other end portion of the second part and the other end portion of the third part, which are opposite to one end portion coupled to the first part.

6. The battery pack of claim 4, wherein an inlet port for introducing a refrigerant and a discharge port for discharging the refrigerant, which is connected to the cooling flow path formed inside, are formed in one or more of the second part and the third part.

7. The battery pack of claim 6, wherein the pack case is configured such that the refrigerant introduced through the inlet port is configured to move along the cooling flow path in an order of the second part, the first part, and the third part or is configured to move in an order of the third part, the first part, and the second part.

8. The battery pack of claim 7, wherein the cooling flow path is formed in a " 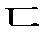 " pattern as the plurality of parts are coupled.

9. The battery pack of claim 5, wherein a connection groove for connection between adjacent cooling flow paths is formed at end portions of the second part and the third part facing the auxiliary part.

10. The battery pack of claim 9, wherein the connection groove is formed by cutting.

11. The battery pack of claim 6, further comprising a refrigerant circulation device accommodated inside the pack case and connected to the inlet port and the discharge port to circulate the refrigerant.

12. The battery pack of claim 5, wherein a thermal resin is interposed between the battery cell assembly and the bottom cover of the pack case.

13. The battery pack of claim 1, wherein the plurality of parts are each formed of aluminum extrusion molding.

14. The battery pack of claim 1, wherein the plurality of parts are coupled to each other through friction stir welding (FSW).

15. The battery pack of claim 1, wherein
the pack case further includes a top cover facing an upper surface of the battery cell assembly; and
a side cover formed in a direction connecting the top cover and the bottom cover.

16. The vehicle comprising the battery pack described in any one of claims 1 to 15.
